# EUROPÄISCHE PATENTSCHRIFT

(11) **EP 3 954 594 B1**
(45) Veröffentlichungstag und Bekanntmachung des Hinweises auf die Patenterteilung: **06.09.2023**
(21) Anmeldenummer: 21184403.0
(22) Anmeldetag: 08.07.2021
(51) Int. Cl.: B62B 3/14

(54) **UNTERGESTELL UND TRANSPORTWAGEN**
UNDERCARRIAGE AND TROLLEY
CHÂSSIS ET CHARIOT DE TRANSPORT

(30) Priorität: 12.08.2020 DE 202020104671 U
(43) Veröffentlichungstag der Anmeldung: 16.02.2022
(73) Patentinhaber: Wanzl GmbH & Co. KGaA, 89340 Leipheim (DE)
(72) Erfinder: Acikgöz, Ayhan, 89312 Günzburg (DE); Eichele, Hermann, 89340 Leipheim (DE); Gerstmaier, Michael, 89441 Obermedlingen (DE)

(56) Entgegenhaltungen:
- EP-A1- 1 029 766
- CN-U- 203 142 737
- DE-A1- 2 742 958
- DE-A1- 3 324 659
- DE-U1-202019 002 910
- JP-A- 2001 122 125

## Beschreibung

Die vorliegende Erfindung betrifft ein Untergestell für einen Transportwagen, insbesondere einen Einkaufswagen, sowie einen Transportwagen, insbesondere einen Einkaufswagen, der mit einem solchen Untergestell ausgestattet ist.

Einkaufswagen können mit zusätzlichen Ablagen ausgestattet sein. Auf diesen Ablagen kann eine Getränkekiste oder in ein Gebinde eingepackte Flaschen meist 1,5 L Kunststoffflaschen abgestellt werden. Es hat sich als sinnvoll erwiesen, solche Ablagen im Bereich unterhalb des Schiebegriffs eines Wagens vorzusehen. Meist sind solche Ablagen klappbar ausgeführt, so dass sie bei Nichtgebrauch Platz sparend in dem Bereich unterhalb des Korbes geklappt werden können. Hierbei sind die Ablagen derart ausgelegt, dass sie beim Stapeln gleicher Wagen ineinander, wenn sie sich z.B. in Reihe in einer Parkbox befinden, nicht störend wirken bzw. den Stapelabstand nicht unnötig vergrößern.

Transportwagen mit Kistenablage sind zum Beispiel aus der EP 06 09 663 B1 oder der EP 0 254 210 B1 bekannt. Das Untergestell solcher Wagen ist meist aus einem Rohr gebildet. Hierbei findet meist Rund- oder Ovalrohr Einsatz. Im hinteren Bereich, d.h. in dem Bereich in dem eine Person den Wagen mit einem Schiebegriff fährt, ist eine Ablage, z.B. für eine Kiste oder ein Flaschengebinde vorgesehen.

Es kommt jedoch vor, dass trotz dieser hinteren Ablage nicht ausreichend Platz für den Transport von Ware gegeben ist.

Aus dem Stand der Technik ist ein weiterer Wagen mit einem Untergestell bekannt. Die DE 27 42 958 A1 zeigt exemplarisch einen Einkaufswagen mit einem Untergestell und mehreren Ablagen, sowohl im vorderen als auch im hinteren Bereich des Untergestells. Diese wirken jedoch gerade im vorderen Bereich des Untergestells bei voller Beladung als störend. Auch kann es Probleme beim Stapeln geben.

Auch die DE 20 2019 0029 10 U1 zeigt einen Wagen mit einer zusätzlichen Ablage für Ware, die im hinteren Bereich des Untergestells bzw. Wagens vorgesehen ist. Zusätzliche Ablagefläche im vorderen Bereich ist nicht gegeben. Lediglich der Gitterrost unterhalb des Korbes weist eine Ablagefläche auf.

Die japanische Schrift JP 2001 122125 A zeigt einen Transportwagen für die Ablage von Körben, insbesondere Einkaufskörben. Hierfür weist das Fahrgestell drei Ablagen auf, einer hinteren Ablage und zwei Ablagen auf, die im vorderen Bereich des Fahrgestells in Fahrtrichtung des Wagens angeordnet sind. Ohne die Verwendung der Kunststoffkörbe erweist sich die Ablage von Ware im vorderen Bereich jedoch als schwierig und kann leicht herunterfallen.

Auch die EP 1 029 766 zeigt einen Transportwagen mit einem Untergestell, an dem eine untere Haltevorrichtung für zusätzliche Körbe vorgesehen sind. Ohne Körbe ist eine Ablage von Gegenständen bzw. Ware nicht möglich.

Daher besteht die Aufgabe der vorliegenden Erfindung darin, das Untergestell und den Wagen derart weiterzuentwickeln, dass mehr Platz zur Beförderung von Ware zur Verfügung gestellt werden kann.

Diese Aufgabe wird erfindungsgemäß gelöst durch ein verbessertes Untergestell mit den Merkmalen des Anspruchs 1.

Danach ist ein Untergestell für einen Transportwagen, insbesondere einen Einkaufswagen, vorgesehen, wobei das Untergestell zwei gegenüberliegende Holme aufweist an dem vier Rollen angeordnet sind, wobei Elemente zur Aufnahme eines Korbes zur Ablage der Ware vorgesehen sind, wobei zwischen den beiden Holmen weiterhin ein Verbindungsbügel vorgesehen ist, und wobei im vorderen Bereich des Untergestells eine Ablage zur Aufnahme von Getränke-Gebinden, einer Getränkekiste oder anderen Gegenständen angeordnet ist,
wobei die Ablage aus einem Querdraht gebildet ist, an dem ein weiterer ins Innere des Wagens verlaufender Draht angeordnet ist,
wobei der ins Innere des Wagens verlaufende Draht einen Begrenzungsbereich aufweist, wobei der Begrenzungsbereich einen Teil des Drahtes bildet, der um ca. 90° zum übrigen Draht in Richtung der Holme gebogen ist, und
der Draht gerade und schräge Abschnitte (B1), (B2), (B3) aufweist, wobei als erster Bereich (B1) ein gerader Bereich gewählt ist, als zweiter Bereich (B2) ein schräger Bereich folgt, der den Abstand zwischen den Drähten vermindert,
und wobei dann wieder ein gerader Bereich als dritter Bereich (B3) gewählt ist, der schließlich in den Begrenzungsbereich mündet.

Bevorzugte Ausführungsformen ergeben sich aus den abhängigen Ansprüchen.

Bei dem Transportwagen kann es sich insbesondere um einen Einkaufswagen, insbesondere um einen stapelbaren Einkaufswagen handeln. Denkbar ist insbesondere, dass der Transportwagenkorpus ein Drahtgitterkorb oder ein Kunststoffkorb ist. Das Volumen des Korbes kann unterschiedlich groß ausgeführt sein, das Untergesell kann entsprechend angepasst werden.

Die Erfindung basiert auf dem Grundgedanken, dass durch eine weitere Ablage, die im vorderen Bereich des Wagens vorgesehen ist, zusätzlicher Stauraum für die Ablage insbesondere von zwei Gebinden oder einer Kiste geschaffen wird.

Die Ablage kann aus Runddrähten gebildet ist. Dieser lässt sich leicht biegen, ist dauerhaft einsetzbar und lässt sich ortsfest an dem Untergestell befestigen. Die gewünschte Form kann einfach hergestellt werden. Auch ist denkbar, nachträglich eine solche Ablage bei Bedarf am Untergestell anzubringen.

Insbesondere ist die Ablage aus einem Querdraht gebildet, an dem ein weiterer ins Innere des Wagens verlaufender Draht angeordnet ist. Dieser ins Innere verlaufende Draht hierbei kann an zwei Stellen mit dem Querdraht verbunden sein und sich verjüngend in dem Bereich unterhalb des Korbes ausgeführt sein.

Weiterhin kann der ins Innere des Wagens verlaufende Draht mit einer Neigung versehen sein, die ins Innere des Wagens abfallend verläuft. Insbesondere kann die Neigung des Drahtes bei ca. 12° liegen. Das sichert die Ware, die auf der Ablage angeordnet ist, z.B. auch, wenn sich der Wagen auf einem Fahrsteig befindet.

Der ins Innere des Wagens verlaufende Draht weist einen Begrenzungsbereich auf, wobei der Begrenzungsbereich einen Teil des Drahtes bildet, der um ca. 90° zum übrigen Draht in Richtung der Holme gebogen ist.

Weiterhin kann die Ablage mit einer Abrutschsicherung versehen sein, die am Querdraht ortsfest angeordnet ist. Durch das Zusammenwirken von Begrenzungsbereich und Abrutschsicherung kann ein Herunterfallen der Waren verhindert werden.

Hierbei kann die Abrutschsicherung aus zwei Kugeln gebildet sein. Diese können aus einem metallischen Material gebildet sein und somit einfach auf den Querdraht mittels eines dauerhaften Fügeverfahrens z.B. in Form einer Schweißverbindung angebracht insbesondere angepunktet werden. Eine Beschädigung eines Gebindes kann durch eine kugelförmige Ausführung verhindert werden. Bei der Beladung mit einer Kiste, können die Kugeln auch bedenkenlos in einen Bereich der Kiste eintauchen und somit ein ungewolltes Herunterfallen verhindern.

Alternativ kann die Abrutschsicherung aus einem weiteren Draht gebildet sein. Dieser kann anstelle der Kugeln ebenfalls einfach z.B. mittels einer Schweißverbindung dauerhaft und kostengünstig an dem Querdraht angeordnet werden.

In einer dritten und vierten Ausführung kann die Abrutschsicherung aus einem Blech oder einem Flachstahl gebildet sein. Durch einen höheren Materialeinsatz kann eine vergrößerte Sicherheit erzielt werden und ein ungewolltes Herunterrutschen der Beladung unterbunden werden.

Weiterhin kann am Wagen eine hintere Ablage vorgesehen sein. Beide Ablagen können unabhängig voneinander genutzt werden. Im gestapelten Zustand behindern sie sich nicht weiter.

Hierbei kann die hintere Ablage mit einem Begrenzungsbügel ausgestattet sein, die an den Holmen angebracht werden kann. Dadurch ist auch die Beladung der hinteren Ablage gesichert.

Je nach Größe des Korbvolumens kann zwischen den Holmen oberhalb der Ablage weiterhin eine zusätzliche Stützvorrichtung vorgesehen sein. Diese verhindert, dass die Beladung der vorderen Ablage ins Innere des Wagens fällt.

Weiterhin betrifft die vorliegende Erfindung einen Transportwagen, insbesondere einen Einkaufswagen, der mit einem Untergestell mit einer vorderen Ablage der eingangs beschriebenen Art ausgestattet ist.

Weitere Einzelheiten und Vorteile der Erfindung sollen nun anhand eines in den Zeichnungen näher dargestellten Ausführungsbeispiels erläutert werden.

Es zeigen:
- Fig. 1: eine perspektivische Ansicht eines erfindungsgemäßen Untergestells;
- Fig. 2: eine Draufsicht auf das Untergestell eines Transportwagens;
- Fig. 3: eine Seitenansicht des Untergestells;
- Fig. 4: eine Vorderansicht des Untergestells;
- Fig. 5: eine perspektivische Ansicht eines erfindungsgemäßen Untergestells beladen mit einer Kiste, sowie
- Fig. 6: eine weitere perspektivische Ansicht eines erfindungsgemäßen Untergestells beladen mit zwei 6-Flaschen-Gebinden.

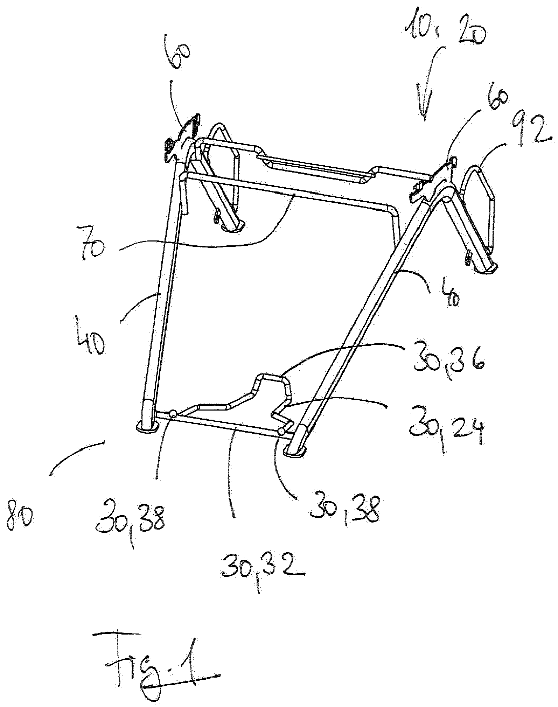

Fig. 1 zeigt ein Untergestell 20 eines Transportwagens 10. Das Untergestell 20 weist eine vordere Ablage 30 auf. Diese Ablage 30 ist zwischen den Holmen 40 des Untergestells 20 ortsfest angeordnet. Die Ablage 30 ist aus einem Runddraht gebildet. Insbesondere weist die Ablage 30 einen Querdraht 30 auf. Der Querdraht 30 verbindet beide Holme 40. An dem Querdraht 30 ist ortsfest ein ins Innere des Wagens 10 verlaufender Draht 34 angeordnet. Dieser Draht 34 ist symmetrisch als Schlaufe gebildet und weist einen Begrenzungsbereich 36 auf. Der Querdraht 30 kann hierbei einen größeren Durchmesser aufweisen, als der ins Innere des Wagens 10 verlaufende Draht 34. Der Draht 34 weist gerade und schräge Abschnitte auf. Beide Enden des Drahtes 34 sind mit kleinen Abwickelungen versehen, die das ortsfeste Anbringen des Drahtes 34 an dem Querdraht 30 ermöglichen. Der Draht 34 ist in Form einer Schlaufe gebildet.

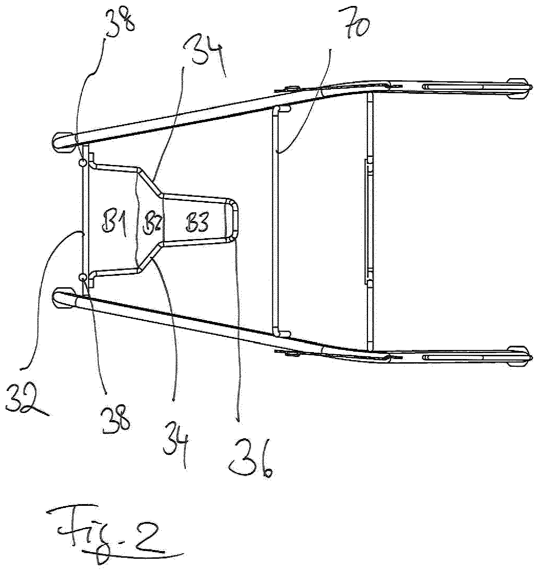

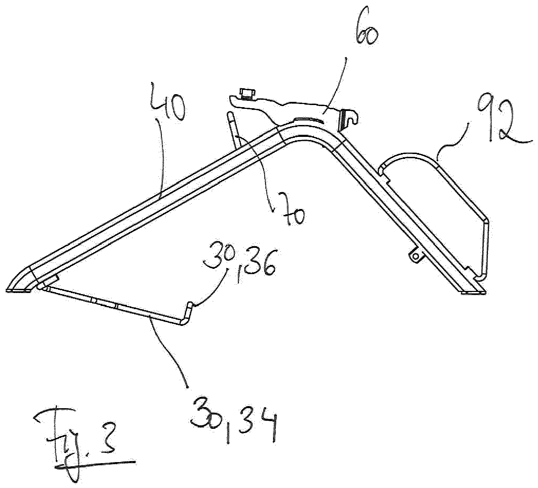

Wie Fig. 2 zu entnehmen, weist der Draht 34 gerade und schräge Abschnitte B1, B2, B3 auf. Zunächst ist als erster Bereich B1 ein gerader Bereich gewählt. Dann folgt als zweiter Bereich B2 ein schräger Bereich, der den Abstand zwischen den Drähten 34 vermindert. Dann ist wieder ein gerader Bereich als dritter Bereich B3 gewählt, der schließlich in den Begrenzungsbereich 36 mündet. Der Draht 34 endet in dem Begrenzungsbereich 36, der, wie insbesondere auch in Fig. 3 gezeigt, um ca. 90° abgewinkelt ausgeführt ist. Die Höhe des Begrenzungsbereichs 36 beträgt wenige Zentimeter. Die Breite des Begrenzungsbereichs 36 beträgt auch einige Zentimeter.

Die Abrutschsicherung 38 ist in Form von zwei Kugeln auf dem Querdraht 32 ausgeführt. Es hat sich als vorteilhaft erwiesen, den Abstand zu den Holmen 40 gering zu halten.

Wie aus den Figuren 1 bis 3 ersichtlich, weist das Untergestell 20 einen Verbindungsbügel 70 auf. Dieser dient als Abstützung für den Korb und gleichzeitig als Stapelanschlag, für die Stapelung gleicher Wagen 10. Die Elemente 60 dienen der Aufnahme eines Korbes.

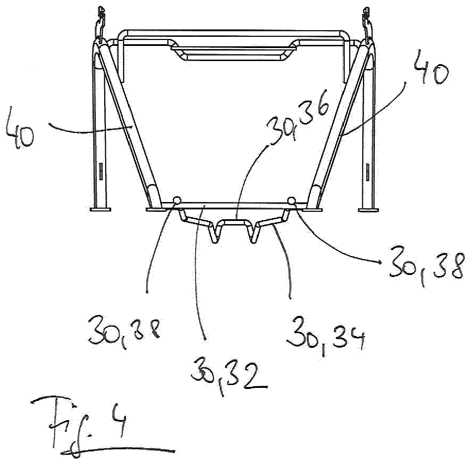

Fig. 4 zeigt nochmals einen bevorzugten Verlauf des Drahtes 34.

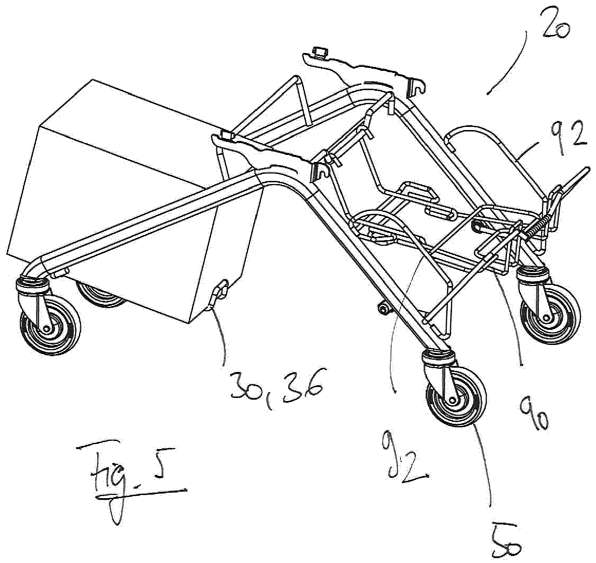

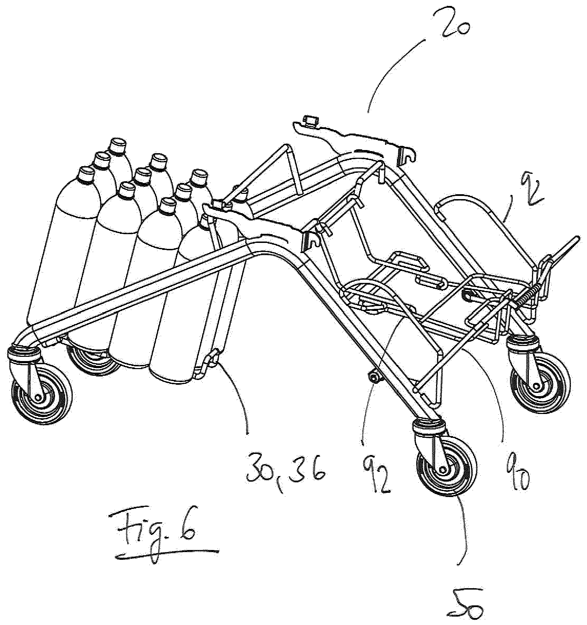

Figuren 5 und 6 zeigen eine beladene Ablage 30. In Fig. 5 mit einer Kiste und in Fig. 6 mit zwei 6-Flaschen-Gebinden. Das Untergestell 20 weist weiterhin eine hintere Ablage 90 auf, die mit Begrenzungsbügeln 92 versehen ist.

### Bezugszeichen

- 10: Transportwagen, Wagen, Einkaufswagen
- 20: Untergestell
- 30: Ablage
- 32: Querdraht
- 34: Draht
- 36: Begrenzungsbereich
- 38: Abrutschsicherung
- 40: Holm
- 50: Rolle
- 60: Element
- 70: Verbindungsbügel
- 80: vorderer Bereich
- 90: hintere Ablage
- 92: Begrenzungsbügel

## Patentansprüche

1. Untergestell (20) für einen Transportwagen (10), insbesondere einen Einkaufswagen, wobei das Untergestell (20) zwei gegenüberliegende Holme (40) aufweist an dem vier Rollen (50) angeordnet sind, wobei Elemente (60) zur Aufnahme eines Korbes zur Ablage der Ware vorgesehen sind, wobei zwischen den beiden Holmen (40) weiterhin ein Verbindungsbügel (70) vorgesehen ist, und wobei im vorderen Bereich (80) des Untergestells (20) eine Ablage (30) zur Aufnahme von Getränke-Gebinden, einer Getränkekiste oder anderen Gegenständen angeordnet ist,
wobei die Ablage (30) aus einem Querdraht (32) gebildet ist, an dem ein weiterer ins Innere des Wagens (10) verlaufender Draht (34) angeordnet ist,
wobei der ins Innere des Wagens (10) verlaufende Draht (34) einen Begrenzungsbereich (36) aufweist, wobei der Begrenzungsbereich (36) einen Teil des Drahtes (34) bildet, der um ca. 90° zum übrigen Draht (34) in Richtung der Holme (40) gebogen ist,
**dadurch gekennzeichnet, dass**
der Draht (34) gerade und schräge Abschnitte (B1), (B2), (B3) aufweist, wobei als erster Bereich (B1) ein gerader Bereich gewählt ist, als zweiter Bereich (B2) ein schräger Bereich folgt, der den Abstand zwischen je zwei Abschnitten des Drahtes (34) vermindert,
und wobei dann wieder ein gerader Bereich als dritter Bereich (B3) gewählt ist, der schließlich in den Begrenzungsbereich (36) mündet.

2. Untergestell (20) nach Anspruch 1, **dadurch gekennzeichnet, dass** die Ablage (30) aus Runddrähten gebildet ist.

3. Untergestell (20) nach Anspruch 1, **dadurch gekennzeichnet, dass** der ins Innere des Wagens verlaufende Draht (34) mit einer Neigung versehen ist, die ins Innere des Wagens (10) abfallend verläuft.

4. Untergestell (20) nach Anspruch 3, **dadurch gekennzeichnet, dass** die Neigung des Drahtes (34) bei ca. 12° liegt.

5. Untergestell (20) nach einem der vorhergehenden Ansprüche, **dadurch gekennzeichnet, dass** die Ablage (30) mit einer Abrutschsicherung (38) versehen ist, die am Querdraht (32) ortsfest angeordnet ist.

6. Untergestell (20) nach Anspruch 5, **dadurch gekennzeichnet, dass** die Abrutschsicherung (38) aus zwei Kugeln gebildet ist.

7. Untergestell (20) nach Anspruch 5, **dadurch gekennzeichnet, dass** die Abrutschsicherung (38) aus einem weiteren Draht gebildet ist.

8. Untergestell (20) nach Anspruch 5, **dadurch gekennzeichnet, dass** die Abrutschsicherung (38) aus einem Blech gebildet ist.

9. Untergestell (20) nach Anspruch 5, **dadurch gekennzeichnet, dass** die Abrutschsicherung (38) aus einem Flachstahl gebildet ist.

10. Untergestell (20) nach Anspruch 1, **dadurch gekennzeichnet, dass** weiterhin eine hintere Ablage (90) vorgesehen ist.

11. Untergestell (20) nach Anspruch 10, **dadurch gekennzeichnet, dass** die hintere Ablage (90) mit Begrenzungsbügel (92) ausgestattet ist, die an den Holmen (40) angebracht werden.

12. Untergestell (20) nach Anspruch 1, **dadurch gekennzeichnet, dass** zwischen den Holmen (40) oberhalb der Ablage (30) weiterhin eine zusätzliche Stützvorrichtung vorgesehen ist.

13. Transportwagen (10), insbesondere Einkaufswagen, mit einem Untergestell einem der Ansprüche 1 bis 12.

## Claims

1. Undercarriage (20) for a trolley (10), in particular a shopping trolley, wherein the undercarriage (20) has two mutually opposite struts (40) on which are disposed four castors (50); wherein elements (60) for receiving a basket for depositing the goods are provided; wherein a connecting bracket (70) is furthermore provided between the two struts (40); and wherein a shelf (30) for receiving beverage containers, a beverage crate or other items is disposed in the front region (80) of the undercarriage (20); wherein the shelf (30) is formed from a transverse wire (32) on which is disposed a further wire (34) that runs into the interior of the trolley (10); wherein the wire (34) that runs into the interior of the trolley (10) has a delimitation region (36); wherein the delimitation region (36) forms part of the wire (34), said part being bent in the direction of the struts (40) by approx. 90° in relation to the remaining wire (34), **characterized in that**
the wire (34) has straight and oblique portions (B1), (B2), (B3), wherein a straight region is chosen as a first region (B1), an oblique region which reduces the spacing between two respective portions of the wire (34) follows as the second region (B2), and wherein a straight region which ultimately opens into the delimitation region (36) is thereafter chosen again as the third region (B3).

2. Undercarriage (20) according to Claim 1, **characterized in that** the shelf (30) is formed from round wires.

3. Undercarriage (20) according to Claim 1, **characterized in that** the wire (34) that runs into the interior of the trolley is provided with an incline which runs so as to descend into the interior of the trolley (10).

4. Undercarriage (20) according to Claim 3, **characterized in that** the incline of the wire (34) is approx. 12°.

5. Undercarriage (20) according to one of the preceding claims, **characterized in that** the shelf (30) is provided with an anti-slip safeguard (38) which is disposed so as to be stationary on the transverse wire (32).

6. Undercarriage (20) according to Claim 5, **characterized in that** the anti-slip safeguard (38) is formed by two spheres.

7. Undercarriage (20) according to Claim 5, **characterized in that** the anti-slip safeguard (38) is formed from a further wire.

8. Undercarriage (20) according to Claim 5, **characterized in that** the anti-slip safeguard (38) is formed from a metal sheet.

9. Undercarriage (20) according to Claim 5, **characterized in that** the anti-slip safeguard (38) is formed from a flat steel bar.

10. Undercarriage (20) according to Claim 1, **characterized in that** a rear shelf (90) is furthermore provided.

11. Undercarriage (20) according to Claim 10, **characterized in that** the rear shelf (90) is equipped with delimitation brackets (92) which are attached to the struts (40).

12. Undercarriage (20) according to Claim 1, **characterized in that** an additional supporting device is furthermore provided between the struts (40), so as to be above the shelf (30).

13. Trolley (10), in particular shopping trolley, having an undercarriage according to one of Claims 1 to 12.

## Revendications

1. Châssis (20) pour un chariot de transport (10), en particulier un chariot de courses, le châssis (20) présentant deux longerons (40) opposés sur lesquels sont disposées quatre roulettes (50), des éléments (60) servant à la réception d'un panier servant au dépôt des marchandises étant prévus, en outre un arceau de liaison (70) étant prévu entre les deux longerons (40), et un dispositif récepteur (30) servant à la réception d'emballage pour boissons, d'une caisse à bouteilles ou d'autres objets étant disposé dans la région avant (80) du châssis (20),
le dispositif récepteur (30) étant formé à partir d'un fil transversal (32) sur lequel est disposé un autre fil (34) s'étendant à l'intérieur du chariot (10),
le fil (34) s'étendant à l'intérieur du chariot (10) présentant une région de limitation (36), la région de limitation (36) formant une partie du fil (34) qui est pliée d'environ 90° par rapport au fil restant (34) en direction des longerons (40),
**caractérisé en ce que**
le fil (34) présente des portions droites et obliques (B1), (B2), (B3), une région droite étant choisie comme première région (B1), une région oblique suivant comme deuxième région (B2), laquelle région oblique diminue la distance entre deux portions respectives du fil (34),
et à nouveau une région droite étant choisie comme troisième région (B3), laquelle débouche finalement dans la région de limitation (36).

2. Châssis (20) selon la revendication 1, **caractérisé en ce que** le dispositif récepteur (30) est formé à partir de fils de section circulaire.

3. Châssis (20) selon la revendication 1, **caractérisé en ce que** le fil (34) s'étendant à l'intérieur du chariot est doté d'une inclinaison qui s'étend de manière descendante à l'intérieur du chariot (10).

4. Châssis (20) selon la revendication 3, **caractérisé en ce que** l'inclinaison du fil (34) est d'environ 12°.

5. Châssis (20) selon l'une des revendications précédentes, **caractérisé en ce que** le dispositif récepteur (30) est doté d'une protection anti-glissement (38) qui est disposée de manière fixe sur le fil transversal (32).

6. Châssis (20) selon la revendication 5, **caractérisé en ce que** la protection anti-glissement (38) est formée à partir de deux billes.

7. Châssis (20) selon la revendication 5, **caractérisé en ce que** la protection anti-glissement (38) est formée à partir d'un autre fil.

8. Châssis (20) selon la revendication 5, **caractérisé en ce que** la protection anti-glissement (38) est formée à partir d'une tôle.

9. Châssis (20) selon la revendication 5, **caractérisé en ce que** la protection anti-glissement (38) est formée à partir d'un acier plat.

10. Châssis (20) selon la revendication 1, **caractérisé en ce qu'**en outre un dispositif récepteur arrière (90) est prévu.

11. Châssis (20) selon la revendication 10, **caractérisé en ce que** le dispositif récepteur arrière (90) est équipé d'arceaux de limitation (92) qui sont installés sur les longerons (40).

12. Châssis (20) selon la revendication 1, **caractérisé en ce qu'**en outre un dispositif de support supplémentaire est prévu entre les longerons (40) au-dessus du dispositif récepteur (30).

13. Chariot de transport (10), en particulier chariot de courses, comprenant un châssis selon l'une des revendications 1 à 12.
